# EUROPEAN PATENT SPECIFICATION

(11) **EP 3 101 530 B1**
(45) Date of publication and mention of the grant of the patent: **08.05.2019**
(21) Application number: 16172076.8
(22) Date of filing: 31.05.2016
(51) Int. Cl.: G06F 3/06

(54) **DATA DISTRIBUTION METHOD, DATA STORAGE METHOD, RELATED APPARATUS, AND SYSTEM**
DATENVERTEILUNGSVERFAHREN, DATENSPEICHERVERFAHREN, ZUGEHÖRIGE VORRICHTUNG UND SYSTEM
PROCÉDÉ DE DISTRIBUTION DE DONNÉES, PROCÉDÉ DE STOCKAGE DE DONNÉES, APPAREIL ASSOCIÉ ET SYSTÈME

(30) Priority: 04.06.2015 CN 201510304621
(43) Date of publication of application: 07.12.2016
(73) Proprietor: Huawei Technologies Co., Ltd., Shenzhen Guangdong 518129 (CN)
(72) Inventor: Wang, Daohui, Shenzhen Guangdong (CN); Zhang, Feng, Shenzhen Guangdong (CN); Fan, Wei, Shenzhen Guangdong (CN); Zhang, Zhile, Shenzhen Guangdong (CN); Zeng, Yongqiang, Shenzhen Guangdong (CN)
(74) Representative: Kreuz, Georg Maria

(56) References cited:
- US-A1- 2010 094 921
- US-A1- 2011 029 840
- US-A1- 2013 283 125
- US-B1- 7 783 600

## Description

### TECHNICAL FIELD

The present invention relates to the data storage field, and in particular, to a data distribution method, a data storage method, a related apparatus, and a system.

### BACKGROUND

In a current phase, distributed storage systems increasingly use an erasure coding (EC, Erasure coding) technology to store data. A principle of the erasure coding technology is to divide data into m data blocks, and perform parity coding on the m data blocks by using a redundancy algorithm, to generate k parity blocks, where the m data blocks and the k parity blocks constitute one EC stripe. Each EC stripe can tolerate a loss of k data blocks or parity blocks.

In the erasure coding technology, a data distribution apparatus performs erasure coding on data to generate m data blocks and k parity blocks, and then distributes the m data blocks and the k parity blocks to m+k storage nodes. If multiple data distribution apparatuses concurrently read or write data in a same EC stripe, a problem of a conflict between multiple data distribution apparatuses needs to be solved by using a distributed lock.

However, if the distributed lock is used to solve the problem of a conflict between multiple data distribution apparatuses, when an upper-layer application distributes IO requests by using different data distribution apparatuses, frequent lock contending and lock switching are caused between data distribution apparatuses. Because lock switching is a relatively time-consuming operation, frequent lock switching causes a relatively long read-write delay, and cannot meet an actual application requirement.

US 7783600 B1 discloses a system for a redundancy management service for peer-to-peer networks. After receiving a request at a device to upload a data object into a P2P network, a redundancy manager associated with the device is identified, and the data object is transmitted to the redundancy manager. After a plurality of data blocks derived from the data object, the redundancy manager uploads the data blocks to one or more target devices of the P2P network.

US 2010/0094921 A1 discloses a method for peer-to-peer distributed file storage in a network. The method transmits data file peer-storage information from a first peer node to a backup manager. Then, the backup manager creates a mapping plan for mapping data file to peer group, and transmits the mapping plan to the first peer node. The first peer node creates the (n+x) erasure-code segments and distributes the segments to the other peer node in the group according to the mapping plan.

US 2013/0283125 A1 discloses a method for distributing encoded data slice partitions and the parity data partition in different separate memory according to memory state.

### SUMMARY

The invention provides a method and an apparatus as defined in the claims.

In the data distribution method provided by the embodiments of the present invention, a data distribution apparatus determines to-be-stored data, divides the to-be-stored data according to a logical partition to obtain P data segments, determines a node group corresponding to each data segment, and distributes the data segment to a primary node in the corresponding node group. In the embodiments of the present invention, the data distribution apparatus divides the to-be-stored data into preset sizes and then distributes the data to primary nodes in node groups of a distributed storage system, and the primary nodes perform erasure coding; the data distribution apparatus itself does not perform erasure coding on the data. In this way, a problem that multiple data distribution apparatuses concurrently read or write data in a same EC stripe does not exist, and no conflict exists between data distribution apparatuses. Therefore, in the embodiments of the present invention, a distributed lock does not need to be used between data distribution apparatuses to solve the read-write conflict between data distribution apparatuses, and it is avoided that a read-write delay is caused by lock contending; read-write performance of the distributed storage system is improved, and an actual application requirement can be met.

### BRIEF DESCRIPTION OF DRAWINGS

FIG. 1(a) is a structural diagram of an EC stripe;
FIG. 1(b) is a schematic structural diagram of a distributed storage system according to an embodiment of the present invention;
FIG. 2 is a flowchart of an embodiment of a data distribution method according to an embodiment of the present invention;
FIG. 3 is a flowchart of an embodiment of a data storage method according to an embodiment of the present invention;
FIG. 4 is a structural diagram of an embodiment of a data distribution apparatus according to an embodiment of the present invention;
FIG. 5 is a structural diagram of an embodiment of a data storage apparatus according to an embodiment of the present invention;
FIG. 6 is a structural diagram of another embodiment of a data distribution apparatus according to an embodiment of the present invention; and
FIG. 7 is a structural diagram of another embodiment of a data storage apparatus according to an embodiment of the present invention.

### DESCRIPTION OF EMBODIMENTS

The embodiments of the present invention provide a data distribution method for improving performance of a distributed storage system. The embodiments of the present invention further provide a related data storage method, a related apparatus, and a system, which are described separately hereinafter.

The distributed storage system includes multiple storage nodes. An upper-layer data distribution apparatus divides to-be-stored data into multiple data blocks, and then distributes the data blocks to multiple storage nodes of the distributed storage system to perform storage. Distributed storage of data can reduce a data loss risk and improve reliability of the distributed storage system. The data distribution apparatus may be a client, a server, or another device.

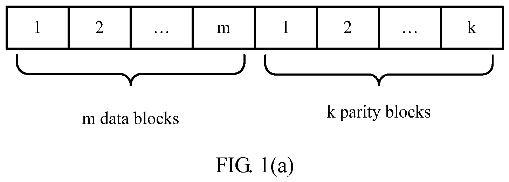

A principle of an EC technology is to divide to-be-stored data into m data blocks, and perform parity coding on the m data blocks by using a redundancy algorithm, to generate k parity blocks, where the m data blocks and the k parity blocks constitute one EC stripe. For a basic structure of the EC stripe, refer to FIG. 1(a). Each data block or parity block may also be referred to as an EC block. Each EC stripe can tolerate a loss of k EC blocks. When the distributed storage system uses the EC technology to perform data storage, the data distribution apparatus generates multiple EC stripes according to to-be-stored data, and distributes m+k EC blocks of each EC stripe to m+k storage nodes of the distributed storage system to perform storage. In this way, when a node in the distributed storage system is faulty, an EC block stored on the faulty node can be recovered according to EC blocks on non-faulty nodes. Unless more than k storage nodes in the m+k storage nodes storing an EC stripe are faulty, data of the EC stripe can be read or written by the data distribution apparatus completely. Therefore, the distributed storage system that uses the EC technology to store data is highly reliable.

An EC stripe stored in the distributed storage system can be read or overwritten by the data distribution apparatus. It should be noted that, when reading an EC stripe, the data distribution apparatus only needs to read, from the EC stripe, a data block for storing data. However, when an EC stripe is overwritten, for example, when an i^{th} data block in m data blocks of an EC stripe is overwritten, other data blocks of the EC stripe do not need to be changed, but it is necessary to regenerate parity blocks of the EC stripe.

If multiple data distribution apparatuses concurrently read or write data in an EC stripe, a read-write conflict may be caused, and a problem of a conflict between multiple data distribution apparatuses needs to be solved by using a distributed lock. However, if the distributed lock is used to solve the problem of a conflict between multiple data distribution apparatuses, when an upper-layer application distributes IO requests by using different data distribution apparatuses, frequent lock contending and lock switching are caused between data distribution apparatuses. Because lock switching is a relatively time-consuming operation, frequent lock switching causes a relatively long read-write delay, and cannot meet an actual application requirement.

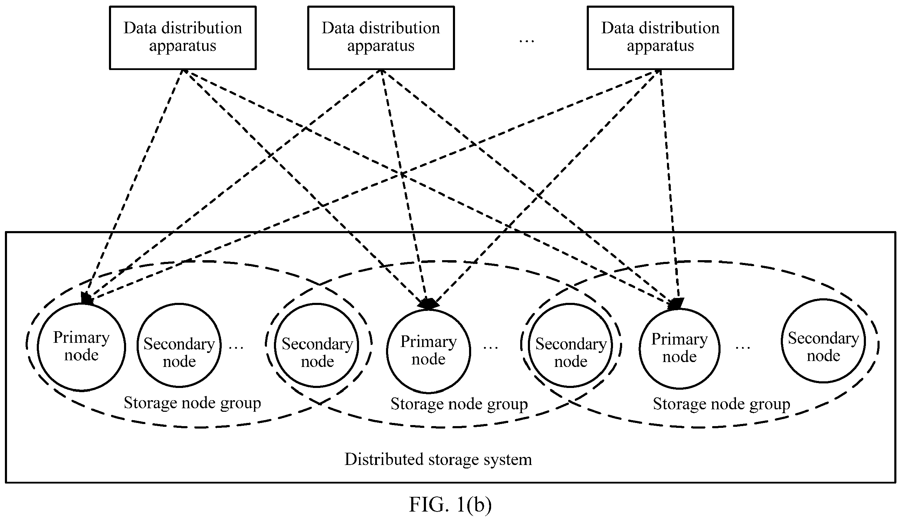

The embodiments of the present invention are dedicated to providing a reliable data distribution method and data storage method to solve the foregoing problem. First, storage nodes in the distributed storage system are grouped in the embodiments of the present invention. Specifically, storage nodes are grouped into multiple storage node groups, where a quantity of storage nodes included in each storage node group is not less than m+k, and one primary storage node (primary node for short hereinafter) is specified in each storage node group. The primary storage node is responsible for interacting with the data distribution apparatus, and is further responsible for controlling a node in a storage node group to which the primary storage node belongs, to perform data storage. Other storage nodes in the storage node group are secondary storage nodes (secondary nodes for short hereinafter). m and k are both positive integers. Different storage node groups may have duplicate storage nodes. For example, a primary node in a storage node group 1 may be a secondary node in a storage node group 2. FIG. 1(b) is a schematic structural diagram of a distributed storage system according to an embodiment of the present invention. FIG. 1(b) is used to indicate only a composition structure of the distributed storage system, and there may also be other structures of storage nodes in the distributed storage system.

A storage node group may be maintained in multiple manners, for example, an additional node group management module may be disposed. The node group management module may be deployed on a data distribution apparatus, or may be deployed on a storage node, which is not limited in the embodiments of the present invention. The node group management module is responsible for maintaining each storage node group. Specifically, the node group management module may be responsible for collecting information about storage nodes included in each storage node group and determining a primary node, and monitoring a status of each storage node in real time by using a heartbeat connection. When a status of a storage node changes or a primary node in a node group changes, the node group management module needs to update collected information. The node group management module notifies the collected information to each data distribution apparatus and storage node for recording, so that each data distribution apparatus and storage node can learn the information about each node group. The information collected by the node group management module may be represented simply in a form of Table (1):

**Table (1)**

| **Node group ID** | **Node** | **Node identity** | **Node status** |
|---|---|---|---|
| Node group 1 | A | Primary node | Normal |
| | B | Secondary node | Normal |
| | ... | ... | ... |
| | C | Secondary node | Faulty |

Table (1) is only a representation form of the information collected by the node group management module. The node group management module may use other forms to represent the collected information, which is not limited in the embodiments of the present invention.

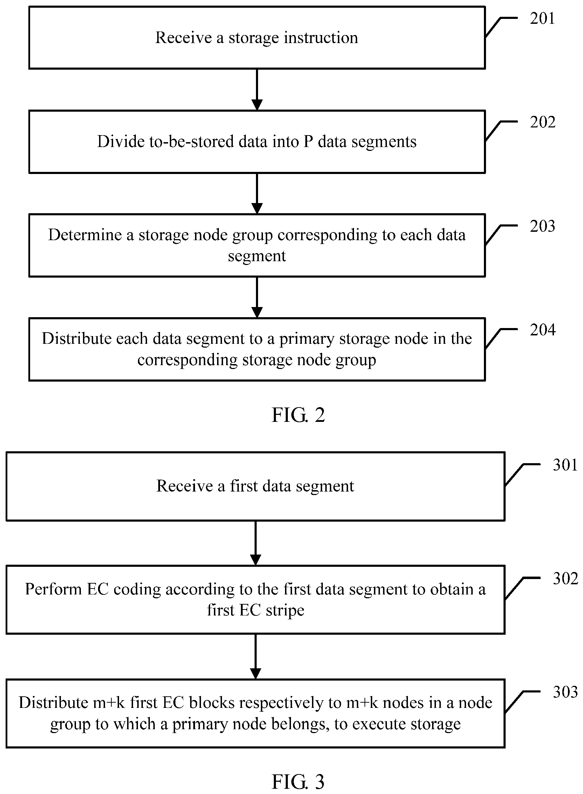

In an embodiment of the present invention, a data distribution apparatus divides to-be-stored data into multiple data segments, and distributes each data segment to a primary node of a corresponding node group. For a procedure thereof, refer to FIG. 2.

201. Receive a storage instruction.

A data distribution apparatus receives a storage instruction of a user, where the storage instruction is used to instruct to store to-be-stored data.

202. Divide to-be-stored data into P data segments.

The data distribution apparatus divides the to-be-stored data into the P data segments, where each data segment corresponds to one EC stripe, a size of each data segment is not greater than Z, and Z is a size of m data blocks.

203. Determine a storage node group corresponding to each data segment.

The data distribution apparatus determines the storage node group corresponding to each data segment. There are multiple determining methods, which are described in detail in subsequent embodiments, and are not limited herein.

204. Distribute the data segment to a primary storage node in the corresponding storage node group.

After determining the storage node group corresponding to each data segment, the data distribution apparatus distributes each data segment to the primary node in the storage node group corresponding to the data segment.

This embodiment provides a data distribution method, where a data distribution apparatus receives a storage instruction of a user, divides to-be-stored data that the storage instruction instructs to store, into P data segments, determines a storage node group corresponding to each data segment, and finally distributes the data segment to a primary node in the corresponding storage node group. In this embodiment, because the data distribution apparatus directly distributes a data segment obtained after division to a storage node, and no longer performs erasure coding on the to-be-stored data, there is no need to use a distributed lock to solve a conflict problem, frequent lock switching is not caused, and performance of a distributed storage system is improved.

In step 201, the data distribution apparatus parses the storage instruction, and may obtain a start address, a size, or other information of the to-be-stored data. In step 202, there are multiple methods for performing dividing to obtain data segments by the data distribution apparatus. For example, a logical volume (Logical Volume) of the distributed storage system may include multiple logical partitions, and the logical partitions have a size of Z each and do not overlap each other. When performing dividing to obtain data segments, the data distribution apparatus may perform dividing to obtain, according to logical addresses of the to-be-stored data, data that falls within one logical partition as one data segment. For example, if Z is 4 M, the logical volume of the distributed storage system may be divided into multiple logical partitions, where logical addresses of a first logical partition are 0 M-4 M, logical addresses of a second logical partition are 4 M-8 M, logical addresses of a third logical partition are 8 M-12 M... Assuming that logical addresses of the to-be-stored data are 5 M-12 M, because 5 M-8 M fall within a range of the logical addresses of the second logical partition, and 8 M-12 M fall within a range of the logical addresses of the third logical partition, the data distribution apparatus divides the 5 M-12 M to-be-stored data into two data segments, where logical addresses of the two data segments are 5 M-8 M and 8 M-12 M respectively.

From the example in the foregoing paragraph, it can be concluded that, in the P data segments obtained by dividing the to-be-stored data, a startaddress of the first data segment is a start address of the to-be-stored data, and a start address of a p^{th} data segment is a start address of a logical partition that the p^{th} data segment falls within, where 2≤p≤P.

If the logical volume of the distributed storage system is divided into multiple logical partitions, a correspondence between each logical partition and each storage node group may be preset. In this way, in step 203, the data distribution apparatus may determine that a storage node group corresponding to a logical partition that each data segment falls within is a storage node group corresponding to the data segment. More specifically, a unique key value may be set for each logical partition of the distributed storage system, and the data distribution apparatus presets and records a key value corresponding to each storage node group. In this way, the data distribution apparatus may determine that a key value corresponding to the logical partition that each data segment falls within is a key value corresponding to the data segment, and then determine, according to the correspondence between a key value of each data segment and a storage node group, the storage node group corresponding to each data segment.

It may be understood that, if multiple upper-layer data distribution apparatuses in the distributed storage system all use the method in step 201 to step 204 to perform data distribution, even if data segments are distributed by multiple data distribution apparatuses, as long as the distributed data segments fall within a same logical partition of the distributed storage system, the data segments are distributed to a primary node of a same node group.

After receiving a data segment distributed by the data distribution apparatus, the primary node performs erasure coding on the received data segment to obtain an EC stripe, and allocates m+k EC blocks in the EC stripe to m+k storage nodes in the node group to which the primary node belongs, to perform storage. In the embodiment shown in FIG. 2, the data distribution apparatus distributes P data segments in total, and therefore needs to distribute P data segments to primary nodes of P storage node groups. Referring to FIG. 3, the following uses a primary node in a storage node group as an example for description.

301. Receive a first data segment.

A primary node receives a first data segment distributed by a data distribution apparatus, where the first data segment is a data segment in P data segments distributed by the data distribution apparatus. A size of the first data segment is not greater than Z.

Particularly, when the data distribution apparatus performs dividing to obtain data segments according to a logical partition of a distributed storage system, if the first data segment is the first or last data segment in the P data segments, the size of the first data segment may be less than Z; if the first data segment is any data segment in the second to (P-1)^{th} data segments in the P data segments, the size of the first data segment should be equal to Z.

302. Perform erasure coding according to the first data segment to obtain a first EC stripe.

The primary node performs erasure coding according to the first data segment to obtain the first EC stripe. The first EC stripe includes m+k first EC blocks, which are separately m first data blocks and k first parity blocks.

303. Distribute m+k first EC blocks respectively to m+k nodes in a node group to which a primary node belongs, to execute storage.

The primary node distributes the m first data blocks and the k first parity blocks of the first EC stripe respectively to the m+k storage nodes in the storage node group to which the primary node belongs, to execute storage, where each storage node in the m+k storage nodes is responsible for storing one first EC block. The primary node itself may store an EC block (which may be a first data block or may be a first parity block), and then send remaining m+k-1 first EC blocks to m+k-1 secondary nodes for storage. Each secondary node stores one first EC block. The primary node may also not store the first EC block, and directly send the m+k first EC blocks to the m+k secondary nodes for storage, which is not limited in this embodiment.

The embodiment shown in FIG. 2 provides a method for distributing data by a data distribution apparatus. Correspondingly, this embodiment provides a data storage method, which is used to store data distributed by a data distribution apparatus. A primary node receives a first data segment distributed by a data distribution apparatus, performs erasure coding according to the first data segment to obtain a first EC stripe, and allocates m+k data blocks of the first EC stripe to m+k storage nodes to perform storage. In comparison with the prior art, in the method provided by this embodiment, an erasure coding operation that is originally executed by the data distribution apparatus is executed by the primary node instead. In this way, a conflict problem caused by the erasure coding performed by the data distribution apparatus does not exist, and further, there is no need to use a distributed lock to solve the conflict problem. Therefore, frequent lock switching is not caused, and performance of a distributed storage system is improved.

It may be understood that, a primary node of any storage node group in the distributed storage system may execute the data storage method provided by the embodiment shown in FIG. 3.

It is mentioned in the foregoing embodiment that, the logical volume of the distributed storage system may include multiple logical partitions that do not overlap each other, and the data distribution apparatus performs dividing to obtain data that falls within one logical partition as one data segment. In addition, a correspondence exists between a storage node group and a logical partition. It may be understood that, in this embodiment, the logical addresses of the first data segment received by the primary node should fall within a logical partition corresponding to the storage node group to which the primary node belongs. It may be understood that, logical addresses of data segments received by primary nodes of different storage node groups do not overlap each other.

When generating an EC stripe, the primary node may further generate a version number corresponding to the EC stripe.

In an actual application, when receiving the first data segment, the primary node may also receive a data segment distributed by a same or another data distribution apparatus. In this case, the erasure coding performed by the primary node may be classified into the following cases:
Case 1: The primary node receives a second data segment, where the second data segment and the first data segment fall within a same logical partition and logical addresses of the second data segment overlap logical addresses of the first data segment; the primary node performs erasure coding according to the second data segment to obtain a second EC stripe, where the second EC stripe includes m second data blocks and k second parity blocks; the primary node determines a serial distribution sequence of the first EC stripe and the second EC stripe, and distributes the first EC stripe and the second EC stripe to the m+k storage nodes in series according to the serial distribution sequence. Specifically, if the primary node first receives the first data segment, and then receives the second data segment, the primary node first distributes the m+k first EC blocks of the first EC stripe respectively to the m+k storage nodes to execute storage, and then after receiving a response message sent by the m+k storage nodes, distributes the m+k second EC blocks of the second EC stripe respectively to the m+k storage nodes to execute storage, where the response message is used to indicate that the first data segment is stored on the m+k storage nodes successfully, and a version number of the second EC stripe is greater than a version number of the first EC stripe. If the primary node first receives the second data segment, and then receives the first data segment, the primary node first distributes the m+k second EC blocks of the second EC stripe respectively to the m+k storage nodes to execute storage, and then distributes the m+k first EC blocks of the first EC stripe respectively to the m+k storage nodes to execute storage, where a version number of the first EC stripe is greater than a version number of the second EC stripe.
Case 2: The primary node receives a third data segment, where the first data segment and the third data segment fall within a same logical partition, and logical addresses of the first data segment do not overlap logical addresses of the third data segment. In this case, the primary node combines the third data segment into the first data segment, then uses the combined first data segment as a first data segment to be coded in step 302, and then continues to execute step 302 and step 303. For example, a range of logical addresses of the first data segment is 4 M-5 M, a range of logical addresses of the third data segment is 5 M-8 M, and logical addresses of the first data segment and the third data segment all fall within a logical partition 4 M-8 M. The primary node combines the third data segment into the first data segment, and then performs erasure coding according to the combined first data segment to obtain a first EC stripe.
Case 3: The primary node receives a fourth data segment, where the first data segment and the fourth data segment fall within different logical partitions. This case generally occurs on a storage node that is a primary node in two or more storage node groups, or on a primary node in a same storage node group corresponding to multiple logical partitions. In this case, the first data segment and the fourth data segment fall within different logical partitions. Therefore, logical addresses of the first data segment do not overlap logical addresses of the fourth data segment, and the primary node only needs to normally perform coding and data distribution on the first data segment and the fourth data segment, which does not cause a storage conflict. The foregoing three cases may be used not only in a scenario in which the primary node receives two data segments concurrently, but also in a scenario in which the primary node receives three or more data segments concurrently, which is not limited in this embodiment.

As mentioned in the embodiment shown in FIG. 2, each logical partition of the distributed storage system corresponds to a unique key value, and a key value of a logical partition that each data segment falls within is a key value of the data segment. In case 1, because the first data segment and the second data segment fall within the same logical partition, the first data segment and the second data segment have a same key value; in case 2, because the first data segment and the third data segment fall within the same logical partition, the first data segment and the third data segment have a same key value; in case 3, because the first data segment and the fourth data segment fall within different logical partitions, the first data segment and the fourth data segment have different key values. The primary node may determine, according to key values of data segments, whether two data segments fall within a same logical partition.

Particularly, a key value of a data segment may be used as a key value of a corresponding EC stripe to identify a range of logical addresses of a data part of the EC stripe. A key value of an EC stripe may be carried in each EC block of the EC stripe.

In step 302, the primary node performs erasure coding according to the first data segment to obtain the first EC stripe. Specifically, if the size of the first data segment is Z, the first data segment may be just divided into m first data blocks. Then the primary node performs parity coding on the m first data blocks to obtain k first parity blocks. In this way, the first EC stripe is obtained.

If the size of the first data segment is less than Z, the first data segment is not enough for division into m data blocks. The primary node needs to use stored data to supplement the first data segment so that the size is equal to Z, then use the supplemented first data segment as the first data segment to be coded in step 302, and execute a step of dividing the first data segment into m first data blocks, and performing parity coding on the m first data blocks to obtain k first parity blocks. To ensure that the first data segment can fall within a logical partition, the primary node should select, from the stored data, data that falls within the same logical partition as that of the first data segment to supplement the first data segment. For example, if logical addresses of the first data segment are 5 M-8 M and fall within the logical partition 4 M-8 M, the primary node should select stored data whose logical addresses are 4 M-5 M to supplement the first data segment so that the logical addresses are 4 M-8 M.

A method for performing erasure coding according to the second, third, and fourth data segments by the primary node is similar to the method for performing erasure coding according to the first data segment, and is not repeated herein.

For ease of understanding the foregoing embodiment, the following uses a specific application scenario of the foregoing embodiment for description.

An upper layer of the distributed storage system includes a data distribution apparatus A and a data distribution apparatus B. The distributed storage system stores data by using EC stripes, and each EC stripe includes four data blocks and two parity blocks. The distributed storage system includes 100 storage node groups, and a primary node is specified in each storage node group. A storage node group 1 includes six storage nodes, where a primary node is a node A, and secondary nodes are a node B, a node C, a node D, a node E, and a node F. The logical volume of the distributed storage system is divided into multiple logical partitions, where a size of each logical partition is 4 M, that is, a range of logical addresses of a first logical partition is 0 M-4 M, a range of logical addresses of a second logical partition is 4 M-8 M, a range of logical addresses of a third logical partition is 8 M-12 M... Each logical partition corresponds to a unique key value, where a key value corresponding to the first logical partition is 1, a key value corresponding to the second logical partition is 2, and a key value corresponding to the third logical partition is 3...

The data distribution apparatus A receives a storage instruction of a user, where the storage instruction carries to-be-stored data, and logical addresses of the to-be-stored data are 5 M-12 M.

Because 5 M-8 M fall within the second logical partition, and 8 M-12 M fall within the third logical partition, the data distribution apparatus A divides the to-be-stored data into two data segments, where logical addresses of a data segment 1 are 5 M-8 M, and a key value is 2; and logical addresses of a data segment 2 are 8 M-12 M, and a key value is 3.

The data distribution apparatus A presets and records a correspondence between a key value and a storage node group, and determines that the key value 2 corresponds to the storage node group 1 and that the key value 3 corresponds to a storage node group 6.

The data distribution apparatus A distributes the data segment 1 to a primary node (namely, the node A) of the storage node group 1 and distributes the data segment 2 to a primary node of the storage node group 6.

The node A receives the data segment 1, and afterward further receives a data segment 3 distributed by the data distribution apparatus B, where logical addresses of the data segment 3 are 4 M-7 M. The node A supplements data of the 4 M-5 M part of the data segment 1, and then performs erasure coding on the supplemented data segment 1 to obtain an EC stripe 1, where a key value of the EC stripe 1 is 2 and a version number is 1; the node A further supplements data of the 7 M-8 M part of the data segment 3, and then performs erasure coding on the supplemented data segment 3 to obtain an EC stripe 3, where a key value of the EC stripe 3 is also 2 and a version number is 2. Each EC stripe includes six EC blocks, which are four data blocks and two parity blocks.

For the EC stripe 1, the node A itself stores one EC block of the EC stripe 1, and distributes five remaining EC blocks to the nodes B-F for storage, so that the nodes B-F respectively store one EC block of the EC stripe 1. After successfully storing EC blocks of the EC stripe 1, the nodes B-F send a response message to the node A; after receiving the response message, the node A itself stores one EC block of the EC stripe 2, and distributes five remaining EC blocks to the nodes B-F for storage, so that the nodes B-F respectively store one EC block of the EC stripe 2.

The foregoing describes in detail the data distribution and data storage methods in the embodiments of the present invention. The following embodiments provide corresponding apparatuses to implement the foregoing methods.

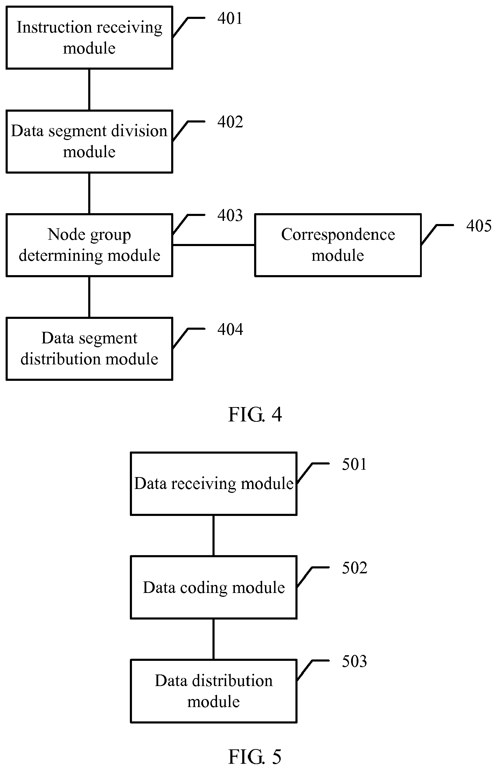

Referring to FIG. 4, a basic structure of a data distribution apparatus provided by an embodiment of the present invention includes:
an instruction receiving module 401, configured to receive a storage instruction, where the storage instruction carries to-be-stored data;
a data segment division module 402, configured to divide the to-be-stored data into P data segments, where each data segment corresponds to one EC stripe, a size of each data segment is not greater than Z, Z is a size of m data blocks, and P is a positive integer;
a node group determining module 403, configured to determine a storage node group corresponding to each data segment; and
a data segment distribution module 404, configured to distribute the data segment to a primary storage node in the storage node group determined by the node group determining module 403 and corresponding to each data segment.

In a data distribution apparatus provided by this embodiment, an instruction receiving module 401 receives a storage instruction of a user; a data segment division module 402 divides to-be-stored data that the storage instruction instructs to store, into P data segments; a node group determining module 403 determines a storage node group corresponding to each data segment; and a data segment distribution module 404 distributes the data segment to a primary node in the corresponding storage node group. In this embodiment, because the data distribution apparatus directly distributes a data segment obtained after division to a storage node, and no longer performs erasure coding on the to-be-stored data, there is no need to use a distributed lock to solve a conflict problem, frequent lock switching is not caused, and performance of a distributed storage system is improved.

Preferably, in still another embodiment of the present invention, a logical volume of the distributed storage system is divided into multiple logical partitions, and the logical partitions have a size of Z each and do not overlap each other; and the data segment division module 402 is specifically configured to:
divide the to-be-stored data into P data segments according to logical addresses of the to-be-stored data, where each data segment falls within one logical partition.

Preferably, in still another embodiment of the present invention, in the P data segments obtained by division by the data segment division module 402, a start address of a first data segment is a start address of the to-be-stored data, and a start address of a p^{th} data segment is a start address of a logical partition that the p^{th} data segment falls within, where 2≤p≤P.

Preferably, in still another embodiment of the present invention, the data distribution apparatus further includes: a correspondence module 405, configured to preset and record a correspondence between each logical partition and each storage node group; and the node group determining module 403 is specifically configured to determine, according to the correspondence between each logical partition and each storage node group, the storage node group corresponding to a logical partition that the data segment falls within. The correspondence module 405 is an optional module, and the data distribution apparatus may not have the correspondence module 405.

Preferably, in still another embodiment of the present invention, each logical partition of the distributed storage system uniquely corresponds to one key value, and the correspondence module 405 is specifically configured to preset and record a key value corresponding to a storage node group; and the node group determining module 403 is specifically configured to determine a key value of the data segment according to the logical partition that the data segment falls within, and determine, according to the key value of the data segment, the storage node group corresponding to the data segment.

An embodiment of the present invention further provides a related data storage apparatus, applied to a primary node in any storage node group of a distributed storage system. Referring to FIG. 5, a basic structure of the data storage apparatus includes:
a data receiving module 501, configured to receive a first data segment, where a size of the first data segment is not greater than Z, where Z is a size of m data blocks;
a data coding module 502, configured to perform erasure coding according to the first data segment to obtain a first EC stripe, where the first EC stripe includes m first data blocks and k first parity blocks; and
a data distribution module 503, configured to distribute the first EC stripe to m+k storage nodes to execute storage, where each storage node in the m+k storage nodes is responsible for storing any one of the m first data blocks or the k first parity blocks of the first EC stripe.

The embodiment shown in FIG. 4 provides a data distribution apparatus; correspondingly, this embodiment provides a data storage apparatus, configured to store data distributed by the data distribution apparatus. In a data storage apparatus of a primary node, a data receiving module 501 receives a first data segment distributed by a data distribution apparatus; a data coding module 502 performs erasure coding on the first data segment to obtain a first EC stripe; and a data distribution module 503 distributes m+k data blocks of the first EC stripe to m+k storage nodes to perform storage. In comparison with the prior art, in this embodiment, an erasure coding operation that is originally executed by the data distribution apparatus is executed by the data storage apparatus instead. In this way, a conflict problem caused by the erasure coding performed by the data distribution apparatus does not exist, and further, there is no need to use a distributed lock to solve the conflict problem. Therefore, frequent lock switching is not caused, and performance of a distributed storage system is improved.

Preferably, in still another embodiment of the present invention, a logical volume of the distributed storage system includes multiple logical partitions, and the logical partitions have a size of Z each and do not overlap each other. The first data segment falls within one logical partition.

Preferably, in still another embodiment of the present invention, the data receiving module 501 is further configured to:
receive a second data segment, where the second data segment and the first data segment fall within the same logical partition, and logical addresses of the second data segment overlap logical addresses of the first data segment;
the data coding module 502 is further configured to perform erasure coding according to the second data segment to obtain a second EC stripe, where the second EC stripe includes m second data blocks and k second parity blocks; and
the data distribution module 503 is specifically configured to determine a serial distribution sequence of the first EC stripe and the second EC stripe, and distribute the first EC stripe and the second EC stripe in series according to the serial distribution sequence to the m+k storage nodes to execute storage.

A purpose of the serial distribution operation is to avoid a storage conflict of the first EC stripe and the second EC stripe on the m+k storage nodes. Each storage node in the m+k storage nodes is responsible for storing any one of the m first data blocks or the k first parity blocks of the first EC stripe, and any one of the m second data blocks or the k second parity blocks of the second EC stripe. Preferably, in still another embodiment of the present invention, the data distribution module 503 distributes, by using the following method, the first EC stripe and the second EC stripe in series according to the serial distribution sequence to the m+k storage nodes in series to execute storage:
if a receiving time of the first data segment is earlier than a receiving time of the second data segment, first distributing the first EC stripe to the m+k storage nodes to execute storage, and after receiving a response message indicating that the m+k storage nodes successfully store the first EC stripe, distributing the second EC stripe to the m+k storage nodes to execute storage; or
if a receiving time of the first data segment is later than a receiving time of the second data segment, first distributing the second EC stripe to the m+k storage nodes to execute storage, and after receiving a response message indicating that the m+k storage nodes successfully store the second EC stripe, distributing the first EC stripe to the m+k storage nodes to execute storage.

Preferably, in still another embodiment of the present invention, the data receiving module 501 is further configured to receive a third data segment, where the third data segment and the first data segment fall within the same logical partition, and logical addresses of the third data segment do not overlap logical addresses of the first data segment; and
the data coding module 502 is further configured to combine the third data segment into the first data segment, and trigger the step of performing erasure coding according to the first data segment to obtain a first EC stripe.

Preferably, in still another embodiment of the present invention, the data coding module 502 performs erasure coding on the first data segment by using the following method: if the size of the first data segment is equal to Z, dividing the first data segment into m first data blocks, and performing parity coding on the m first data blocks to obtain k first parity blocks; or if the size of the first data segment is less than Z, using stored data to supplement the first data segment so that the size is equal to Z, then dividing the supplemented first data segment into m first data blocks, and performing parity coding on the m first data blocks to obtain k first parity blocks.

For ease of understanding the foregoing embodiment, the following uses a specific application scenario of the foregoing embodiment for description.

An upper layer of the distributed storage system includes a data distribution apparatus A and a data distribution apparatus B. The distributed storage system stores data by using EC stripes, and each EC stripe includes four data blocks and two parity blocks. The distributed storage system includes 100 storage node groups, and a primary node is specified in each storage node group. A storage node group 1 includes six storage nodes, where a primary node is a node A, and secondary nodes are a node B, a node C, a node D, a node E, and a node F. The logical volume of the distributed storage system is divided into multiple logical partitions, where a size of each logical partition is 4 M, that is, a range of logical addresses of a first logical partition is 0 M-4 M, a range of logical addresses of a second logical partition is 4 M-8 M, a range of logical addresses of a third logical partition is 8 M-12 M... Each logical partition corresponds to a unique key value, where a key value corresponding to the first logical partition is 1, a key value corresponding to the second logical partition is 2, and a key value corresponding to the third logical partition is 3...

An instruction receiving module 401 of the data distribution apparatus A receives a storage instruction of a user, where the storage instruction carries to-be-stored data, and logical addresses of the to-be-stored data are 5 M-12 M.

Because 5 M-8 M fall within the second logical partition, and 8 M-12 M fall within the third logical partition, a data segment division module 402 divides the to-be-stored data into two data segments, where logical addresses of a data segment 1 are 5 M-8 M, and a key value is 2; and logical addresses of a data segment 2 are 8 M-12 M, and a key value is 3.

A node group determining module 403 presets and records a correspondence between a key value and a storage node group, determines that the key value 2 corresponds to the storage node group 1 and that the key value 3 corresponds to a storage node group 6.

A data segment distribution module 404 distributes the data segment 1 to a primary node (namely, the node A) of the storage node group 1 and distributes the data segment 2 to a primary node of the storage node group 6.

A data receiving module 501 of the node A receives the data segment 1, and afterward further receives a data segment 3 distributed by the data distribution apparatus B, where logical addresses of the data segment 3 are 4 M-7 M. A data coding module 502 supplements data of the 4 M-5 M part of the data segment 1, and then performs erasure coding on the supplemented data segment 1 to obtain an EC stripe 1, where a key value of the EC stripe 1 is 2 and a version number is 1; the data coding module 502 further supplements data of the 7 M-8 M part of the data segment 3, and then performs erasure coding on the supplemented data segment 3 to obtain an EC stripe 3, where a key value of the EC stripe 3 is also 2 and a version number is 2. Each EC stripe includes six EC blocks, which are four data blocks and two parity blocks.

A data distribution module 503 allocates one EC block of the EC stripe 1 to the node A, and distributes five remaining EC blocks to the nodes B-F for storage, so that the nodes B-F respectively store one EC block of the EC stripe 1. After successfully storing EC blocks of the EC stripe 1, the nodes B-F send a response message to the node A; after the node A receives the response message and stores one EC block of the EC stripe 2, and the data distribution module 503 distributes five remaining EC blocks to the nodes B-F for storage, so that the nodes B-F respectively store one EC block of the EC stripe 2.

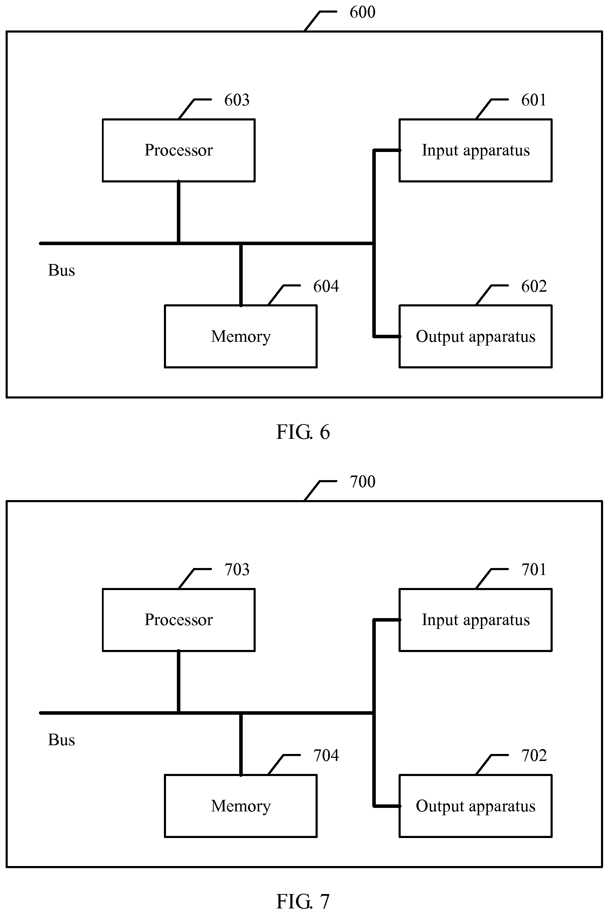

A data distribution apparatus in an embodiment of the present invention is described above from a perspective of a modular functional entity. The following describes a data distribution apparatus in an embodiment of the present invention from a perspective of hardware processing. Referring to FIG. 6, another embodiment of a data distribution apparatus 600 in an embodiment of the present invention includes:
an input apparatus 601, an output apparatus 602, a processor 603, and a memory 604 (there may be one or more processors 603 in the data distribution apparatus 600, and in FIG. 6, one processor 603 is used as an example). In some embodiments of the present invention, the input apparatus 601, the output apparatus 602, the processor 603, and the memory 604 may be connected by a bus or in other manners, where connection by using a bus is used as an example in FIG. 6.

By invoking an operation instruction stored in the memory 604, the processor 603 is configured to execute the following steps:
receiving a storage instruction, where the storage instruction carries to-be-stored data;
dividing the to-be-stored data into P data segments, where each data segment corresponds to one EC stripe, a size of each data segment is not greater than Z, the Z is a size of m data blocks, and the P is a positive integer;
determining a storage node group corresponding to each data segment; and
distributing the data segment to a primary storage node in the determined storage node group corresponding to the data segment.

In some embodiments of the present invention, a logical volume of a distributed storage system includes multiple logical partitions, and the logical partitions have a size of Z each and do not overlap each other; and the processor 603 is further configured to execute the following step:
dividing the to-be-stored data into the P data segments, where each data segment falls within one of the logical partitions.

In some embodiments of the present invention, a start address of a first data segment in the P data segments is a start address of the to-be-stored data, and a start address of a p^{th} data segment in the P data segments is a start address of a logical partition that the p^{th} data segment falls within, where 2≤p≤P.

In some embodiments of the present invention, the processor 603 is further configured to execute the following steps:
presetting and recording a correspondence between each logical partition and each storage node group; and
determining, according to the correspondence between each logical partition and each storage node group, the storage node group corresponding to a logical partition that the data segment falls within.

In some embodiments of the present invention, each logical partition uniquely corresponds to one key value, and the processor 603 is further configured to execute the following steps:
presetting and recording a key value corresponding to each storage node group;
determining a key value of the data segment according to the logical partition that the data segment falls within; and
determining, according to the key value of the data segment, the storage node group corresponding to the data segment.

The following describes a data storage apparatus in an embodiment of the present invention from a perspective of hardware processing. Referring to FIG. 7, another embodiment of a data storage apparatus 700 in an embodiment of the present invention includes:
an input apparatus 701, an output apparatus 702, a processor 703, and a memory 704 (there may be one or more processors 703 in the data storage apparatus 700, and in FIG. 7, one processor 703 is used as an example). In some embodiments of the present invention, the input apparatus 701, the output apparatus 702, the processor 703, and the memory 704 may be connected by a bus or in other manners, where connection by using a bus is used as an example in FIG. 7.

By invoking an operation instruction stored in the memory 704, the processor 703 is configured to execute the following steps:
receiving a first data segment, where a size of the first data segment is not greater than Z, where Z is a size of m data blocks;
performing erasure coding according to the first data segment to obtain a first EC stripe, where the first EC stripe includes m first data blocks and k first parity blocks; and
distributing the first EC stripe to m+k storage nodes to execute storage, where each storage node in the m+k storage nodes is responsible for storing any one of the m first data blocks or the k first parity blocks of the first EC stripe.

In some embodiments of the present invention, a logical volume of the distributed storage system includes multiple logical partitions, and the logical partitions have a size of Z each and do not overlap each other; and the first data segment falls within one of the logical partitions.

In some embodiments of the present invention, the processor 703 is further configured to execute the following steps:
receiving a second data segment, where the second data segment and the first data segment fall within the same logical partition, and logical addresses of the second data segment overlap logical addresses of the first data segment;
performing erasure coding according to the second data segment to obtain a second EC stripe, where the second EC stripe includes m second data blocks and k second parity blocks; and
determining a serial distribution sequence of the first EC stripe and the second EC stripe, and distributing the first EC stripe and the second EC stripe to the m+k storage nodes in series according to the serial distribution sequence.

In some embodiments of the present invention, the processor 703 is further configured to execute the following steps:
if a receiving time of the first data segment is earlier than a receiving time of the second data segment, first distributing the first EC stripe to the m+k storage nodes to execute storage, and
after receiving a response message indicating that the m+k storage nodes successfully store the first EC stripe, distributing the second EC stripe to the m+k storage nodes to execute storage; or
if a receiving time of the first data segment is later than a receiving time of the second data segment, first distributing the second EC stripe to the m+k storage nodes to execute storage, and
after receiving a response message indicating that the m+k storage nodes successfully store the second EC stripe, distributing the first EC stripe to the m+k storage nodes to execute storage.

In some embodiments of the present invention, the processor 703 is further configured to execute the following steps:
receiving a third data segment, where the third data segment and the first data segment fall within the same logical partition, and logical addresses of the third data segment do not overlap logical addresses of the first data segment; and
combining the third data segment into the first data segment, and triggering the step of performing erasure coding according to the first data segment to obtain a first EC stripe.

In some embodiments of the present invention, the processor 703 is further configured to execute the following steps:
when the size of the first data segment is equal to Z, dividing the first data segment into m first data blocks, and performing parity coding on the m first data blocks to obtain k first parity blocks; or
when the size of the first data segment is less than Z, using stored data to supplement the first data segment so that the size is equal to Z, then dividing the supplemented first data segment into m first data blocks, and performing parity coding on the m first data blocks to obtain k first parity blocks.

An embodiment of the present invention further provides a distributed storage system. The distributed storage system includes multiple storage nodes. The distributed storage system stores data by using EC stripes, each EC stripe includes a data part and a parity part, the data part of each EC stripe includes m data blocks, the parity part of each EC stripe includes k parity blocks that are obtained after parity coding is performed on the m data blocks, the multiple storage nodes constitute multiple storage node groups, a quantity of storage nodes included in each storage node group is not less than m+k, and one primary storage node is specified in each storage node group, where the m and k are both positive integers.

The distributed storage system further includes the data storage apparatus shown in FIG. 5 or FIG. 7.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A data distribution method, applied to a distributed storage system, wherein the distributed storage system stores data by using erasure coding, EC, stripes, each EC stripe comprises a data part and a parity part, the data part of each EC stripe comprises m data blocks, the parity part of each EC stripe comprises k parity blocks that are obtained after parity coding is performed on the m data blocks, the distributed storage system comprises multiple storage nodes, the multiple storage nodes constitute multiple storage node groups, a quantity of storage nodes comprised in each storage node group is not less than m+k, and one primary storage node is specified in each storage node group, wherein the m and k are both positive integers; and
the method comprises:
receiving (201) a storage instruction, wherein the storage instruction carries to-be-stored data;
dividing (202) the to-be-stored data into P data segments, wherein each data segment corresponds to one EC stripe, a size of each data segment is not greater than Z, the Z is a size of m data blocks, and the P is a positive integer;
determining (203) a storage node group corresponding to each data segment; and
distributing (204) the data segment to a primary storage node in the determined storage node group corresponding to the data segment;
wherein a logical volume of the distributed storage system comprises multiple logical partitions, and the logical partitions have a size of Z each and do not overlap each other; and
the dividing (202) the to-be-stored data into P data segments comprises:
dividing the to-be-stored data into the P data segments according to logical addresses of the to-be-stored data, wherein each data segment falls within one of the logical partitions;
wherein the method further comprises:
presetting and recording a correspondence between each logical partition and each storage node group; and
the determining (203) a storage node group corresponding to each data segment comprises:
determining, according to the correspondence between each logical partition and each storage node group, the storage node group corresponding to a logical partition in which that the data segment falls;
wherein a start address of a first data segment in the P data segments is a start address of the to-be-stored data, and a start address of a p^{th} data segment in the P data segments is a start address of a logical partition that the p^{th} data segment falls within, wherein 2≤p≤P.

2. The data distribution method according to claim 1, wherein each logical partition uniquely corresponds to one key value, and the presetting and recording a correspondence between each logical partition and each storage node group comprises:
presetting and recording a key value corresponding to each storage node group; and
the determining, according to the correspondence between each logical partition and each storage node group, the storage node group corresponding to a logical partition that the data segment falls within, comprises:
determining a key value of the data segment according to the logical partition that the data segment falls within; and
determining, according to the key value of the data segment, the storage node group corresponding to the data segment.

3. A data distribution apparatus, applied to a distributed storage system, wherein the distributed storage system stores data by using erasure coding EC stripes, each EC stripe comprises a data part and a parity part, the data part of each EC stripe comprises m data blocks, the parity part of each EC stripe comprises k parity blocks that are obtained after parity coding is performed on the m data blocks, the distributed storage system comprises multiple storage nodes, the multiple storage nodes constitute multiple storage node groups, a quantity of storage nodes comprised in each storage node group is not less than m+k, and one primary storage node is specified in each storage node group, wherein the m and k are both positive integers; and
the data distribution apparatus comprises:
an instruction receiving module (401), configured to receive a storage instruction, wherein the storage instruction carries to-be-stored data;
a data segment division module (402), configured to divide the to-be-stored data into P data segments, wherein each data segment corresponds to one EC stripe, a size of each data segment is not greater than Z, the Z is a size of m data blocks, and the P is a positive integer;
a node group determining module (403), configured to determine a storage node group corresponding to each data segment; and
a data segment distribution module (404), configured to distribute the data segment to a primary storage node in the determined storage node group corresponding to the data segment;
wherein a logical volume of the distributed storage system comprises multiple logical partitions, and the logical partitions have a size of Z each and do not overlap each other; and
the data segment division module (402) is specifically configured to:
divide the to-be-stored data into the P data segments according to logical addresses of the to-be-stored data, wherein each data segment falls within one of the logical partitions ;
wherein the data distribution apparatus further comprises:
a correspondence module (405), configured to preset and record a correspondence between each logical partition and each storage node group; and
the node group determining module (403) is specifically configured to:
determine, according to the correspondence between each logical partition and each storage node group, the storage node group corresponding to a logical partition in which the data segment falls;
wherein a start address of a first data segment in the P data segments is a start address of the to-be-stored data, and a start address of a p^{th} data segment in the P data segments is a start address of a logical partition that the p^{th} data segment falls within, wherein 2≤p≤P.

4. The data distribution apparatus according to claim 3, wherein each logical partition uniquely corresponds to one key value, and the correspondence module (405) is specifically configured to:
preset and record a key value corresponding to each storage node group; and
the node group determining module (403) is specifically configured to:
determine a key value of the data segment according to the logical partition that the data segment falls within; and
determine, according to the key value of the data segment, the storage node group corresponding to the data segment.

## Patentansprüche

1. Datenverteilungsverfahren, das für ein verteiltes Speichersystem verwendet wird, wobei im verteilten Speichersystem Daten durch Löschcodierungsstreifen, EC-Streifen, gespeichert werden, jeder EC-Streifen einen Datenteil und einen Paritätsteil umfasst, der Datenteil jedes EC-Streifens m Datenblöcke umfasst, der Paritätsteil jedes EC-Streifens k Paritätsblöcke, die erhalten werden, nachdem eine Paritätscodierung an den m Datenblöcken durchgeführt wurde, umfasst, das verteilte Speichersystem mehrere Speicherknoten umfasst, die mehreren Speicherknoten mehrere Speicherknotengruppen bilden, eine Menge Speicherknoten, die in jeder Speicherknotengruppe enthalten ist, nicht weniger als m + k ist und ein primärer Speicherknoten in jeder Speicherknotengruppe festgelegt ist, wobei sowohl m als auch k positive ganze Zahlen sind; und
das Verfahren Folgendes umfasst:
Empfangen (201) einer Speicheranweisung, wobei die Speicheranweisung zu speichernde Daten führt;
Teilen (202) der zu speichernden Daten in P Datensegmente, wobei jedes Datensegment einem EC-Streifen entspricht, eine Größe jedes Datensegments nicht größer als Z ist, Z eine Größe von m Datenblöcken ist und P eine positive ganze Zahl ist;
Bestimmen (203) einer Speicherknotengruppe, die jedem Datensegment entspricht; und
Verteilen (204) des Datensegments an einen primären Speicherknoten in der bestimmten Speicherknotengruppe, die dem Datensegment entspricht; wobei ein logisches Volumen des verteilten Speichersystems mehrere logische Partitionen umfasst und die logischen Partitionen jeweils eine Größe von Z besitzen und nicht miteinander überlappen; und
das Teilen (202) der zu speichernden Daten in P Datensegmente Folgendes umfasst:
Teilen der zu speichernden Daten in die P Datensegmentes gemäß logischen Adressen der zu speichernden Daten, wobei jedes Datensegment in eine der logischen Partitionen fällt; wobei
das Verfahren ferner Folgendes umfasst:
Voreinstellen und Aufzeichnen einer Entsprechung zwischen jeder logischen Partition und jeder Speicherknotengruppe und
das Bestimmen (203) einer Speicherknotengruppe, die jedem Datensegment entspricht, Folgendes umfasst:
Bestimmen gemäß der Entsprechung zwischen jeder logischen Partition und jeder Speicherknotengruppe der Speicherknotengruppe, die einer logischen Partition, in die das Datensegment fällt, entspricht; wobei
eine Startadresse eines ersten Datensegments in den P Datensegmenten eine Startadresse der zu speichernden Daten ist und eine Startadresse eines p-ten Datensegments in den P Datensegmenten eine Startadresse einer logischen Partition, in die das p-te Datensegment fällt, ist, wobei 2 ≤ p ≤ P.

2. Datenverteilungsverfahren nach Anspruch 1, wobei jede logische Partition eindeutig einem Schlüsselwert entspricht und das Voreinstellen und Aufzeichnen einer Entsprechung zwischen jeder logischen Partition und jeder Speicherknotengruppe Folgendes umfasst:
Voreinstellen und Aufzeichnen eines Schlüsselwertes, der jeder Speicherknotengruppe entspricht; und
das Bestimmen gemäß der Entsprechung zwischen jeder logischen Partition und jeder Speicherknotengruppe der Speicherknotengruppe, die einer logischen Partition, in die das Datensegment fällt, entspricht, Folgendes umfasst:
Bestimmen eines Schlüsselwertes des Datensegments gemäß der logischen Partition, in die das Datensegment fällt; und
Bestimmen gemäß dem Schlüsselwert des Datensegments der Speicherknotengruppe, die dem Datensegment entspricht.

3. Datenverteilungsvorrichtung, die für ein verteiltes Speichersystem verwendet wird, wobei im verteilten Speichersystem Daten durch Löschcodierungsstreifen, EC-Streifen, gespeichert werden, jeder EC-Streifen einen Datenteil und einen Paritätsteil umfasst, der Datenteil jedes EC-Streifens m Datenblöcke umfasst, der Paritätsteil jedes EC-Streifens k Paritätsblöcke, die erhalten werden, nachdem eine Paritätscodierung an den m Datenblöcken durchgeführt wurde, umfasst, das verteilte Speichersystem mehrere Speicherknoten umfasst, die mehreren Speicherknoten mehrere Speicherknotengruppen bilden, eine Menge Speicherknoten, die in jeder Speicherknotengruppe enthalten ist, nicht weniger als m + k ist und ein primärer Speicherknoten in jeder Speicherknotengruppe festgelegt ist, wobei sowohl m als auch k positive ganze Zahlen sind; und
die Datenverteilungsvorrichtung Folgendes umfasst:
ein Anweisungsempfangsmodul (401), das konfiguriert ist, eine Speicheranweisung zu empfangen, wobei die Speicheranweisung zu speichernde Daten führt;
ein Datensegmentteilungsmodul (402), das konfiguriert ist, zu speichernde Daten in P Datensegmente zu teilen, wobei jedes Datensegment einem EC-Streifen entspricht, eine Größe jedes Datensegments nicht größer als Z ist, Z eine Größe von m Datenblöcken ist und P eine positive ganze Zahl ist;
ein Knotengruppenbestimmungsmodul (403), das konfiguriert ist, eine Speicherknotengruppe, die jedem Datensegment entspricht, zu bestimmen; und
ein Datensegmentverteilungsmodul (404), das konfiguriert ist, das Datensegment an einen primären Speicherknoten in der bestimmten Speicherknotengruppe, die dem Datensegment entspricht, zu verteilen; wobei
ein logisches Volumen des verteilten Speichersystems mehrere logische Partitionen umfasst und die logischen Partitionen jeweils eine Größe von Z besitzen und nicht miteinander überlappen; und
das Datensegmentteilungsmodul (402) speziell konfiguriert ist, zum Teilen der zu speichernden Daten in die P Datensegmentes gemäß logischen Adressen der zu speichernden Daten, wobei jedes Datensegment in eine der logischen Partitionen fällt; wobei
die Datenverteilungsvorrichtung ferner Folgendes umfasst:
ein Entsprechungsmodul (405), das konfiguriert ist, eine Entsprechung zwischen jeder logischen Partition und jeder Speicherknotengruppe aufzuzeichnen; und
das Knotengruppenbestimmungsmodul (403) speziell konfiguriert ist, zum Bestimmen gemäß der Entsprechung zwischen jeder logischen Partition und jeder Speicherknotengruppe der Speicherknotengruppe, die einer logischen Partition, in die das Datensegment fällt, entspricht; wobei
eine Startadresse eines ersten Datensegments in den P Datensegmenten eine Startadresse der zu speichernden Daten ist und eine Startadresse eines p-ten Datensegments in den P Datensegmenten eine Startadresse einer logischen Partition, in die das p-te Datensegment fällt, ist, wobei 2 ≤ p ≤ P.

4. Datenverteilungsvorrichtung nach Anspruch 3, wobei jede logische Partition eindeutig einem Schlüsselwert entspricht und das Entsprechungsmodul (405) speziell konfiguriert ist, zum
Voreinstellen und Aufzeichnen eines Schlüsselwertes, der jeder Speicherknotengruppe entspricht; und
das Knotengruppenbestimmungsmodul (403) speziell konfiguriert ist, zum Bestimmen eines Schlüsselwertes des Datensegments gemäß der logischen Partition, in die das Datensegment fällt; und
Bestimmen gemäß dem Schlüsselwert des Datensegments der Speicherknotengruppe, die dem Datensegment entspricht.

## Revendications

1. Procédé de distribution de données, appliqué à un système de stockage distribué, le système de stockage distribué stockant des données en utilisant des bandes de codage d'effacement, EC, chaque bande EC comprenant une partie de données et une partie de parité, la partie de données de chaque bande EC comprenant m blocs de données, la partie de parité de chaque bande EC comprenant k blocs de parité qui sont obtenus après l'exécution d'un codage de parité sur les m blocs de données, le système de stockage distribué comprenant de multiples noeuds de stockage, les multiples noeuds de stockage constituant de multiples groupes de noeuds de stockage, une quantité de noeuds de stockage comprise dans chaque groupe de noeuds de stockage n'étant pas inférieure à m+k, et un noeud de stockage primaire étant spécifié dans chaque groupe de noeuds de stockage, m et k étant tous les deux des entiers positifs ; et
le procédé comprenant :
la réception (201) d'une instruction de stockage, l'instruction de stockage comportant des données à stocker ;
la division (202) des données à stocker en P segments de données, chaque segment de données correspondant à une bande EC, une taille de chaque segment de données n'étant pas supérieure à Z, Z étant une taille de m blocs de données, et P étant un entier positif ;
la détermination (203) d'un groupe de noeuds de stockage correspondant à chaque segment de données ; et
la distribution (204) du segment de données à un noeud de stockage primaire dans le groupe de noeuds de stockage déterminé correspondant au segment de données ;
dans lequel un volume logique du système de stockage distribué comprend de multiples divisions logiques, et les divisions logiques ont chacune une taille de Z et ne se chevauchent pas les unes les autres ; et
la division (202) des données à stocker en P segments de données comprend :
la division des données à stocker en les P segments de données conformément à des adresses logiques des données à stocker, dans lequel chaque segment de données entre dans une des divisions logiques ;
le procédé comprenant en outre :
le préréglage et enregistrement d'une correspondance entre chaque division logique et chaque groupe de noeuds de stockage ; et
la détermination (203) d'un groupe de noeuds de stockage correspondant à chaque segment de données comprend :
la détermination, conformément à la correspondance entre chaque division logique et chaque groupe de noeuds de stockage, du groupe de noeuds de stockage correspondant à une division logique dans laquelle entre le segment de données ;
dans lequel une adresse de début d'un premier segment de données dans les P segments de données est une adresse de début des données à stocker, et une adresse de début d'un p^{ième} segment de données dans les P segments de données est une adresse de début d'une division logique dans laquelle entre le p^{ième} segment de données, où 2≤p≤P.

2. Procédé de distribution de données selon la revendication 1, dans lequel chaque division logique correspond exclusivement à une seule valeur clé, et le préréglage et enregistrement d'une correspondance entre chaque division logique et chaque groupe de noeuds de stockage comprend :
le préréglage et enregistrement d'une valeur clé correspondant à chaque groupe de noeuds de stockage ; et
la détermination , conformément à la correspondance entre chaque division logique et chaque groupe de noeuds de stockage, du groupe de noeuds de stockage correspondant à une division logique dans laquelle entre le segment de données, comprend :
la détermination d'une valeur clé du segment de données conformément à la division logique dans laquelle entre le segment de données ; et
la détermination, conformément à la valeur clé du segment de données, du groupe de noeuds de stockage correspondant au segment de données.

3. Appareil de distribution de données, appliqué à un système de stockage distribué, le système de stockage distribué stockant des données en utilisant des bandes de codage d'effacement, EC, chaque bande EC comprenant une partie de données et une partie de parité, la partie de données de chaque bande EC comprenant m blocs de données, la partie de parité de chaque bande EC comprenant k blocs de parité qui sont obtenus après l'exécution d'un codage de parité sur les m blocs de données, le système de stockage distribué comprenant de multiples noeuds de stockage, les multiples noeuds de stockage constituant de multiples groupes de noeuds de stockage, une quantité de noeuds de stockage comprise dans chaque groupe de noeuds de stockage n'étant pas inférieure à m+k, et un noeud de stockage primaire étant spécifié dans chaque groupe de noeuds de stockage, m et k étant tous les deux des entiers positifs ; et
l'appareil de distribution de données comprenant :
un module de réception d'instruction (401), configuré pour recevoir une instruction de stockage, dans lequel l'instruction de stockage comporte des données à stocker ;
un module de division de segment de données (402), configuré pour diviser les données à stocker en P segments de données, dans lequel chaque segment de données correspond à une bande EC, une taille de chaque segment de données n'étant pas supérieure à Z, Z étant une taille de m blocs de données, et P étant un entier positif ;
un module de détermination de groupe de noeuds (403), configuré pour déterminer un groupe de noeuds de stockage correspondant à chaque segment de données ; et
un module de distribution de segment de données (404), configuré pour distribuer le segment de données à un noeud de stockage primaire dans le groupe de noeuds de stockage déterminé correspondant au segment de données ;
dans lequel un volume logique du système de stockage distribué comprend de multiples divisions logiques, et les divisions logiques ont chacune une taille de Z et ne se chevauchent pas les unes les autres ; et
le module de division de segment de données (402) est configuré spécifiquement pour :
diviser les données à stocker en les P segments de données conformément à des adresses logiques des données à stocker, dans lequel chaque segment de données entre dans une des divisions logiques ;
l'appareil de distribution de données comprenant en outre :
un module de correspondance (405), configuré pour prérégler et enregistrer une correspondance entre chaque division logique et chaque groupe de noeuds de stockage ; et
le module de détermination de groupe de noeuds (403) est configuré spécifiquement pour :
déterminer, conformément à la correspondance entre chaque division logique et chaque groupe de noeuds de stockage, le groupe de noeuds de stockage correspondant à une division logique dans laquelle entre le segment de données ;
dans lequel une adresse de début d'un premier segment de données dans les P segments de données est une adresse de début des données à stocker, et une adresse de début d'un p^{ième} segment de données dans les P segments de données est une adresse de début d'une division logique dans laquelle entre le p^{ième} segment de données, où 2≤p≤P.

4. Appareil de distribution de données selon la revendication 3, dans lequel chaque division logique correspond exclusivement à une seule valeur clé, et le module de correspondance (405) est configuré spécifiquement pour :
prérégler et enregistrer une valeur clé correspondant à chaque groupe de noeuds de stockage ; et
le module de détermination de groupe de noeuds (403) est configuré spécifiquement pour :
déterminer une valeur clé du segment de données conformément à la division logique dans laquelle entre le segment de données ; et
déterminer, conformément à la valeur clé du segment de données, le groupe de noeuds de stockage correspondant au segment de données.
